# EUROPEAN PATENT APPLICATION

(11) **EP 0 660 629 A1**
(43) Date of publication of application: **28.06.1995**
(21) Application number: 94921667.5
(22) Date of filing: 13.07.1994
(51) Int. Cl.: H04Q 7/32, H04M 15/28, H04M 17/02

(54) **TARIFFING AND CHARGING DEVICE FOR MOBILE TELEPHONY WITH ELECTRONIC COMMUNICATION OF THE AMOUNT**

(30) Priority: 13.07.1993 ES 9301564
(71) Applicant: ADT ESPANA, S.L., E-50008 Zaragoza (ES); AUTOMOCION MONCAYO, S.A., E-50004 Zaragoza (ES)
(72) Inventor: BAS BAYOD, Francisco, E-50008 Zaragoza (ES)
(74) Representative: Urizar Anasagasti, José Antonio
(86) International application number: ES9400071
(87) International publication number: WO9502949

(57) **Abstract**

Rating device for mobile telephony, with electronic communication of the amount, wherein the payment is made once the communication is finished, adaptable to any mobile telephone set which uses the present cellular technology (TACS, GSM, etc.), or any other technology which might be used in the future (for example the satellite telephony), and capable of performing an automatic rating, said rating being susceptible of changes of the quantities to be charged, whether it be the initial quantity or the quantity per pitch. The system provides an electronic communication path with other external electronic apparatuses, in order to transmit to said apparatuses the amount of the call or calls effected. It also provides for the connection of a reading/recording unit for intelligent chip cards so as to read the amounts stored in said intelligent chip cards in order to collect the amounts due for the calls made.

## Description

The present invention , as its title indicates, refers to a tariffing and charging device for mobile telephony, with electronic communication of the amount, wherein the payment is made once the communication is finished, adaptable to any mobile telephone set which uses the present cellular technology (TACS, GSM, etc.) or any other technology which might be used in the future (f.e., the satellite telephony) and capable of performing an automatic rating, said rating being susceptible of changes of the quantities to be colleted, whether it be the initial quantity or the quantity per pitch. The system provides an electronic communication path with other external electronic telephone sets, in order to transmit to said sets the amount of the call or calls effected. It also provides that path for the connection of a reading/recording units for intelligent chip cards, so that the collecting could automatically be performed.

### BACKGROUND OF THE INVENTION

It is well known that telephone communication is becoming ever more necessary on nowadays standings. It is also true that the long travelling distances nowadays are very frequent and therefore it is subdue that these communications could be performed on the same transport media.

It is known that there exist some tariffing systems for mobile telephony by cards and by coins. A collecting system by coins for mobile telephony is known which includes two collecting methods: by call tones detection and by following the pitches collected by the operating Company. It also includes a device in order to change the initial and by pitch tariffs, and a visualization system of the accumulated ones. This system has filed patent application with the filing No. P 9200797, in the name of Automoción Moncayo, S.A. and ADT ESPAÑA, S.L. on 13-04-92; and an application for additiono with filing NO. P 9300435, on 04-04-93, on behalf of the same former proprietors.

The disadvantage of these collecting systems by coins or cards is that their volume, because of the processing devices for coins or cards, makes them difficult to install in small size vehicles. Besides, these systems require a constant technical attention, as they include mechanical parts with a not very high medium function failure. Another disadvantage is that they do not allow the collecting centralization of various services, among them the telephone ones.

### DESCRIPTION OF THE INVENTION

In order to resolve the above explained problems, the tariffing device for mobile telephony, with electronic communication of the amount object of the invention has been designed, which can be adapted to any mobile telephone set in the designed market and to other services of mobile telephony which could be designed in the future, by means of slight modifications.

One of the advantages incorporated by this tariffing device is its reduced size, as it does not require any mechanisms for coins or cards, which allows for its installation in any place.

Additionally, it allows the user to perform calls without being in possession of the corresponding card or of sufficient coins to perform the communication. Besides, this device carries out an exact charging, contrary what occurs with coin tariffing systems, wherein once the coin has been collected it is impossible to recuperate its value by the user.

On the other hand, by supplying electronically, through a serial port, the amount of the performed calls, the reading of that amount by the charging centralization devices is permitted, as for example on taximeters, which could accept the value generated value by the tariffing device, object of the invention, as a new supplement. This system can also be employed as totalizer, on applicatons requiring a telephone service at zones where the conventional telephony could not afford, performing a decentralized tariffication, the amount of which can be subsequently communicated to another device por furfher processing and charging.

Notwithstanding, the device is sufficiently versatile as to be able of being connected to a reading/recording equipment of intelligent chip cards, by means of slight modifications on its structure, such that it can control the same in order to convert the equipment in an intelligent chip card charging system.

The system presents two charging options: by constant pitch (e.g. each 1/14th minute, which is a similar period as used by the Telephone Company in her chargings) or by variable pitch, based on detection of the tariffication signal which the operating Company transmits to the mobile telephone set. In the first case, the collecting starts when the communication with the user to be called is established, due to the detection of the audio signal coming from the mobile telephone set.

In the second case, the charging is performed according to the timing marked by tariffication signal transmitted by the operating Company and read from the transceiver by the presented charging system.

The initial and pitch tariffs are easely modifyable, without being necessary the intervention of specialized personnel.

Also the system offers the possibility of monitorizing the accumulated amount value, the total pitch number charged through the communication device by the Telephone Company, the total call number and the total communication time (in minutes), being these, initiable values.

The tariffing device is merely an electronic system, based on a mirocontroller with capacity to respond to the functional needs of the system. This microcontroller controls a visualization device, elements for communication with the maintenance supervisor and a mobile telephony system. It is also provided with a data protection system in case of power supply failure. Besides, it incorporates a communication serial output which can be used for external transmission of the actual accumulated value amount, visualised on the display, which will generally correspond to the total value of the successive calls performed by a user. This serial port, together with other digital signals supplied by the system, can be used for controlling a reading/recording device of intelligent chip cards, such as for example the SCA/OEM of Schulemberg Technologies.

The mobile telephony system consists, in turn, of the mobile telephone set itself, an interface for the audio signals, a conexion detection circuit, a keyboard activating and a blacking circuit and an interface for the tariffication signal reception.

### DESCRIPTION OF THE FIGURES

Figure 1 shows a global blocks diagram of the collecting system, object of the invention.

Figure 2 shows a schematic diagram wherein the main components of the system are shown.

Figure 3 is a flow chart which corresponds to the TARIFFING mode of the system.

Figure 4 is a flow chart which corresponds to the sytem VERIFICATION mode of the system.

Figure 5a is a partial flow chart which corresponds to the NORMAL mode of the system.

Figures 5b, 5c and 5c bis are partial flow charts, interrelated among each other and with that of the figure 5a. The figures 5a, 5b and 5c show the functioning in NORMAL mode of constant pitch tariffication. The figures 5a, 5b and 5c show the functioning in NORMAL mode, when the tariffication signal of the operating Company is used.

### EXAMPLE OF PRACTICAL EMBODIMENT

As previous step to the definition of the system a brief description of the communication interface among the main component elements of a mobile telephony is made, which is used by the said system to obtain or to transmit information to the transceptor.

The mobile telephone sets used as a complement of a tariffication system, consist of two different elements: the transceive and the microtelephone set. Among both apparatus an information interchange is established through a cable, which consists of various series of conductors, among which generally the following can be distinguished: transmission data conductor (CDT), which carries the corresponding information of the keys activated in the microtelephone; the reception data conductor which carries the data signals emitted from the transceptor (CDR); and the data control conductor (CCD), used by the transmitter for sychronizing the transmitted signals either through the CDT, or through the CDR.

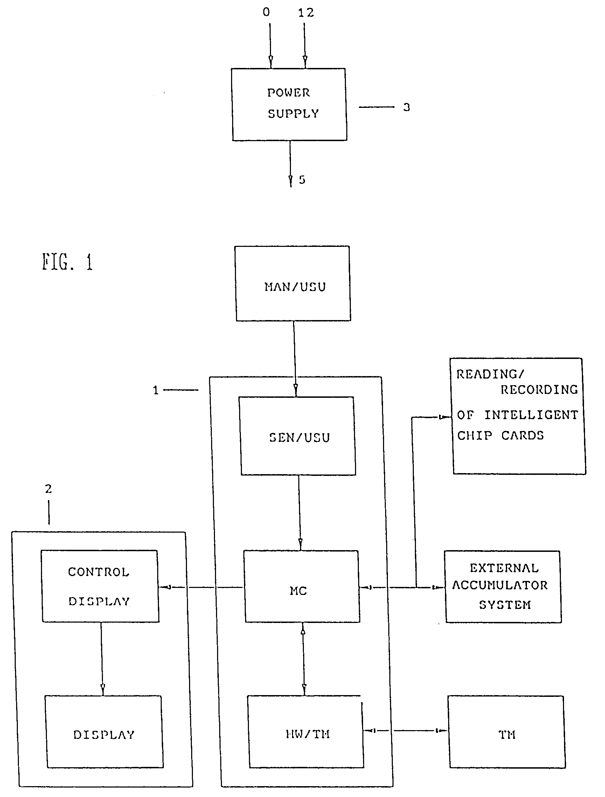

As it can be seen in figure 1, the charging system, object of la invention, consists of a control subsystem (1), a display subsystem (2) and a power supply subsystem (3). The functions of each subsystem will be described as follows:

The power supply subsystem comprises the necessary circuitry to filter and to convert the voltage coming from the supply batteries, to the system working voltage. It contains also an auxiliary battery and circuitry to detect supply voltage drops and, if it is necessary, to permit energy supply from said battery in order to protect the data in the memory. Besides it comprises a general switch (i1), which upon activation interrupts the power supply to all the system.

The block MAN/USU incorporates the different commands which the user uses in order to change tariffs and to visualize totals. This block is connected to SEN/USU which contains the adequate interfaces for the signals coming from that subsystem and which permit the detection of the user's actions by the control subsystem.

The block MC incorporates the microcontroller, its auxiliary circuitry and the interfaces for the different logical input/output ports.

HW/TM comprises the interface for the audio signals which includes an analogical switch for the audio signal transmitted by the microtelephone (IAA optional) and a squared amplifier circuit (AMC), optionally connected to a bandpass filter of high order (F), for the audio signals received; the connection detection circuit (DEC); the keyboard activation and blocking circuit (CABT); and the interface for the CCD or CDR signals of the mobile telephone set TM, signals which are to be used in the case of using the tariffication singal transmitted by the operating Company. CCD is also used to transmit the keyboard codes to the transceiver.

The display subsystem (2) comprises the circuitry in order to control two backilluminated alphanumerical displays, used to show the amounts of the cost of the calls, the tariffs, the accumulated amounts, and the help messages to the user and to the maintenance supervisor, being directly connected to the control subsystem.

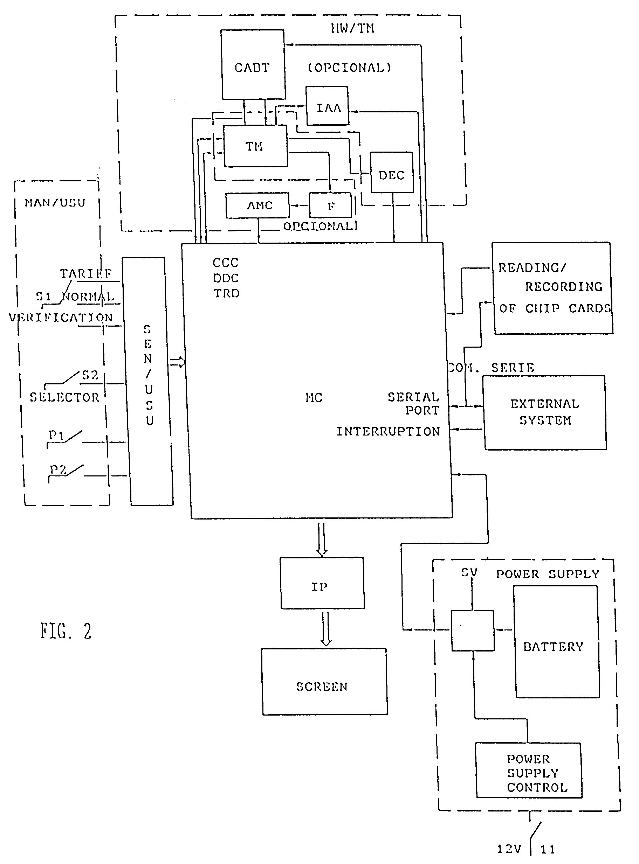

The system offers three operating modes, namely NORMAL, TARIFF and VERIFICATION. The NORMAL mode permits to perform the device as tariffing device. To select the operating mode there is a three-positions switch (s1), (see figure 2). This switch, together with the rest of the commands, are externally attached to the casing of the tariffing device. Additionally, the system includes a power supply switch for the mobile telephone set (i1), which permits its diactivation during the off-periods, provided that (i1) remains activated, the system will be able to receive calls without any costs.

The TARIFF mode permits, according to the position of the commutator switch (s2), to change to the initial tariff or to the pitch amount. The tariffing modification is made by using two push-buttons, one for increasing (p1) and the other for decreasing them (p2). Both are located in the block MAN/USU.

The VERIFICATION mode is used to visualize the collected amount from the last initialization, the total communication time (in minutes), the total number of pitches of the Telephone Company charged by the device, if the tariffication is used according to the pitches charged by the operating Company, and the total number of calls. Additionally it permits the zeroing of all these accumulated amounts. The visualization selection of the charged amount or the total communication time is performed by the selector (s2). The selection of the total number of pitches of Telephone Company and the total number of calls is made by the selector (s3), while push-button (p2) is activated. The zeroing of the total accumulated amount or of the accumulated amounts, concerning the time and number of calls, is carried out by the same push-buttons used for the tariffing modifications.

Either in TARIFF mode or in the VERIFICATION mode one can perform calls without costs, using the mobile telephone in conventional manner.

If being the switch (s1) in NORMAL mode or in VERIFICATION mode is displaced to TARIFF mode and the switch (s2) is in position of initial amount, the previously configurated initial amount will appear on display, and this may be modified by using the push-buttons (p1) and (p2). If, to the contrary, being the switch (s1) in NORMAL mode or in TARIFF mode, it is displaced to VERIFICATION mode, the shown quantity on display will be the accumulated amount from the last zeroing, if the switch (s2) is in position of accumulated amount, or the total communication time, if (s2) is in the other position. On the other hand, if when moving (s2), push-button (p2) is kept activated, then the total number of calls or the total number of pitches of the Telephone Company will be visualized. Being in this mode, if the push-button (p1) is first actuated in sequence thereafter with (p2), within a rate of three seconds, the accumulated account - depending of the position of the commutator switch (s2) -, or the three accumulated amounts related to the total number of calls, the total number of pitches and the total communication time, will be set at zero.

Actuating the switch (s1), one enters in the NORMAL mode and the device may be used as a tariffing device for calls.

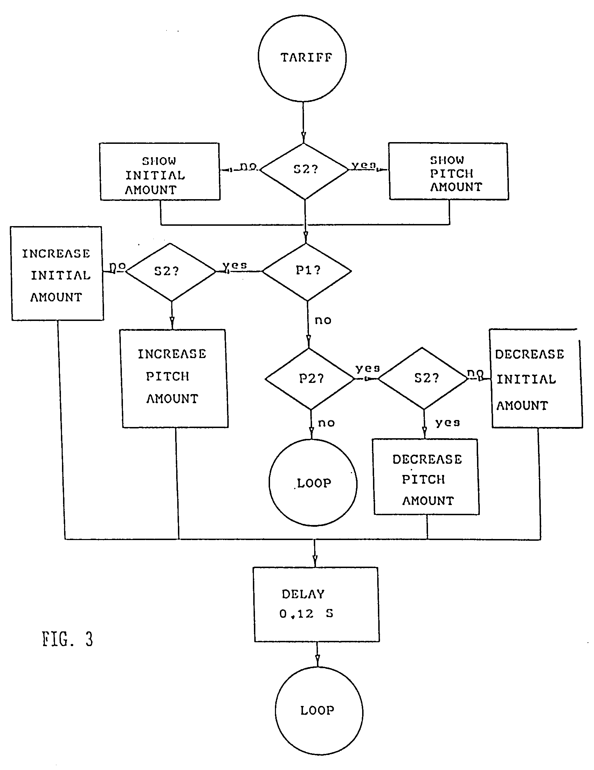

Referring to the figures 2 and 3, the TARIFF mode is analyzed hereinbelow. The function in TARIFF mode when performing the change of quantity by pitch is similar to the process of change of the initial amount, except that the variation is made by an increase of values which are different in one case or in the other, therefore the description will be only made for the former case. The figure 3 presents the state of the system according to which the modifications of the initial amount are performed.

Both the pitch tariff, and the initial amount are defined in peseten fractions, or of any foreign currency. The decimal fraction of the used coin wherein the tariff increases are defined, can easely be modified in the control program, being possible to operate with tenths, hundredths,etc.

In order to modify the tariff by pitch, the operator situates the swith s1, selects the TARIFF mode by means of p1 and the tariff by pitch by means of p2. In this situation the microcontroller (MC) should have read a logical 0 in the terminal s1, a logical 0 in the terminal p1 and a logical 0 in the terminal p2, being placed in TARIFF mode and showing the tariff by pitch and its indicative message. The microcontroller (MC) takes the pitch tariff value from the memory and converts it to code BCD and transmits cipher by cipher, through the display bus, connected to the screen circuit (IP). For each cipher to be shown the microcontroller transmits a series of control signals, in order that said cipher present on the bus be stored and shown on the screen.

Once the display shows the tariff, the microcontroller remains continuously checking the push-buttons (p1) and (p2). An activated push-button makes that the microcontoller detects a logical 0 in the corresponding input, while the value which is read, will be a logical 1 since it is deactivated.

Actuating (p1) the microcontroller detect its activation, increases internally the quantity per pitch and shows it on screen. It enters thereafter in a 0.12 s delay loop which serves to permit the increase velocity be adapted to the human visual perception, whereafter it will return to verfy the push-button status. The same process is performed on actuating (p2), only that the amount per pitch will be decreased.

The increase/decrease process can be performed as many times as wished, provided that p1 or p2 are not actuated for changing the amount or the mode.

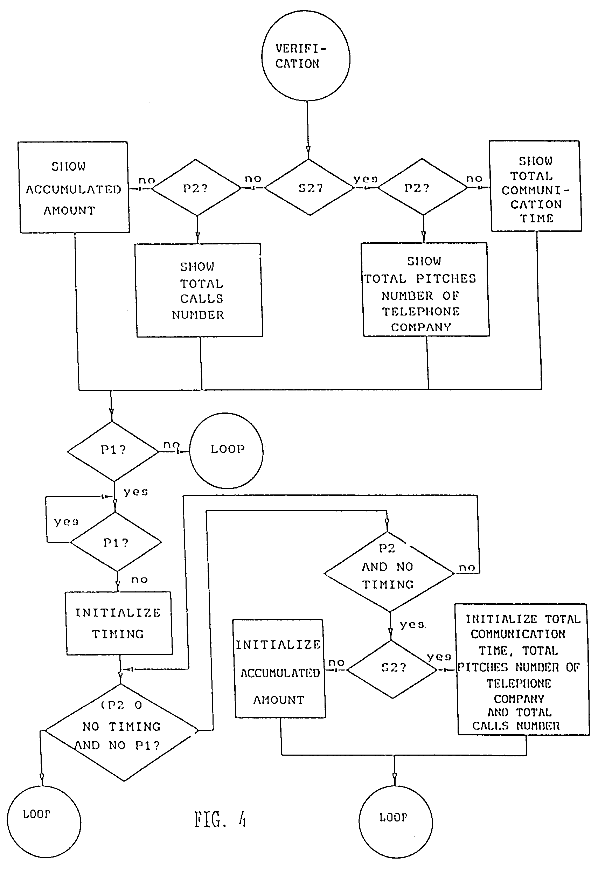

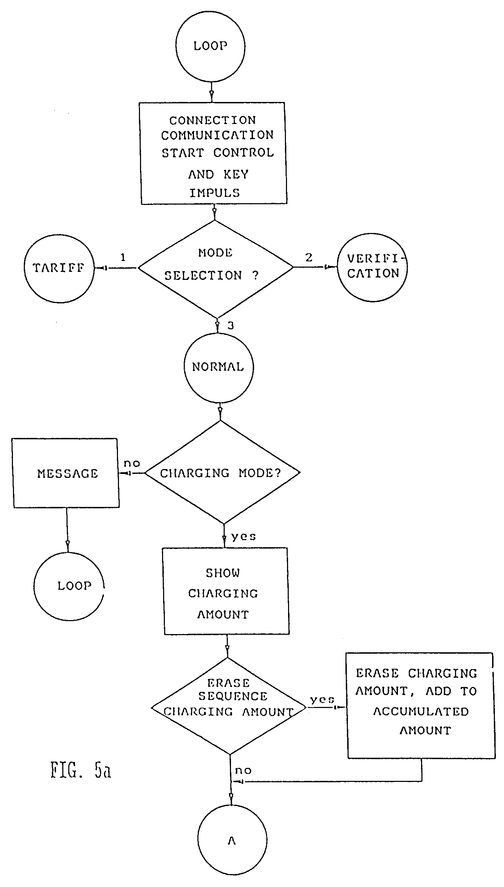

Referring to the figures 2 and 4, the VERIFICATION mode is analyzed hereinbelow.

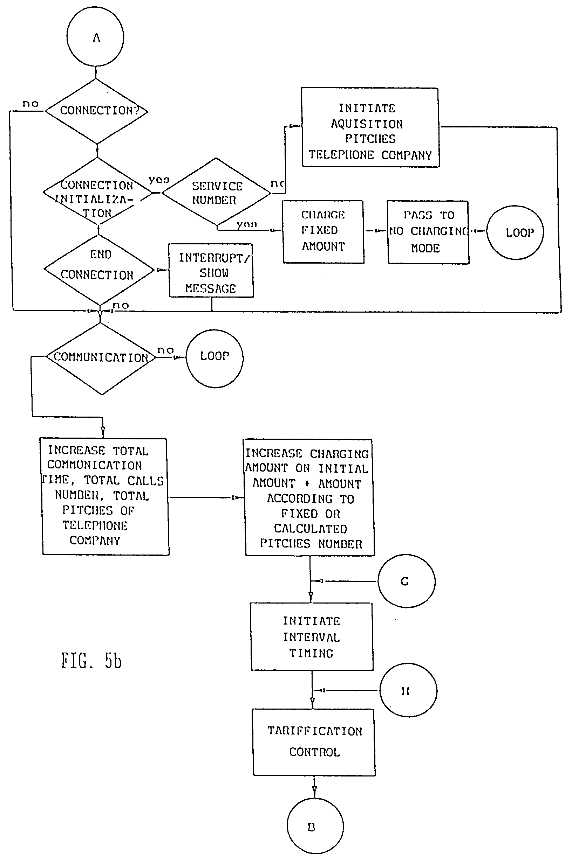

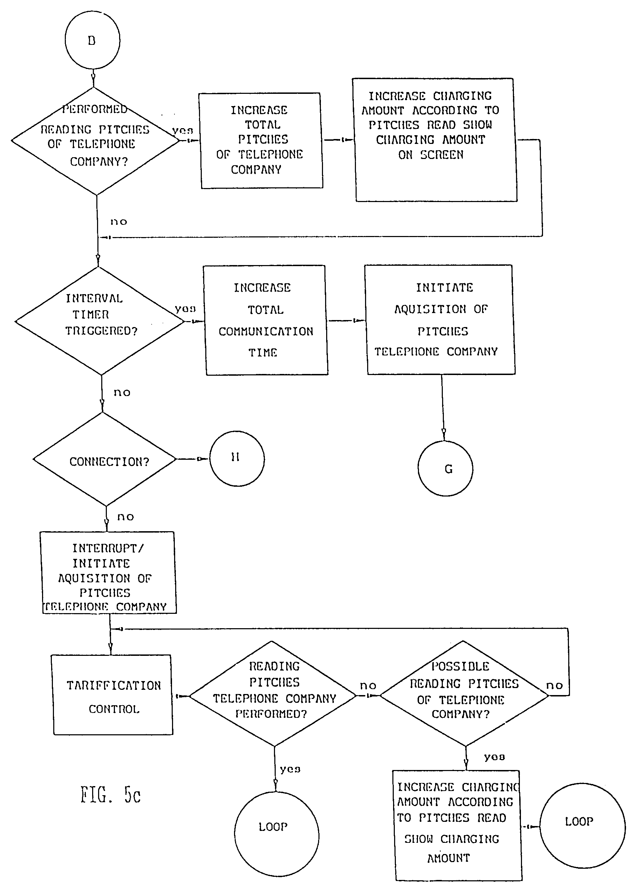

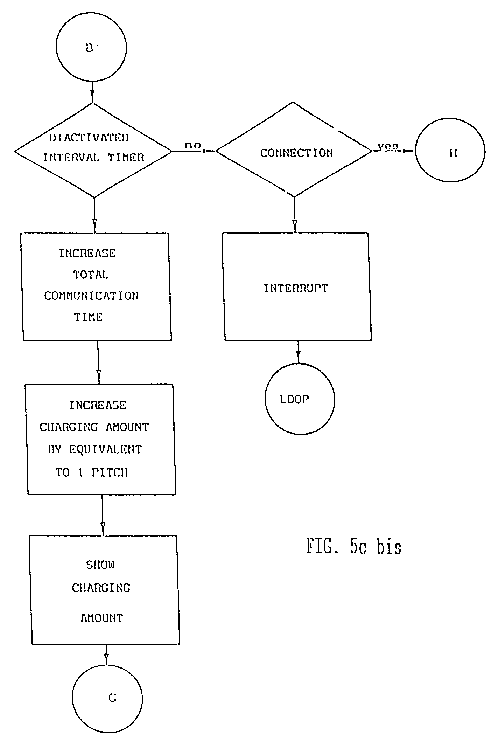

Displacing (s1) to VERIFICATION mode, the VERIFICATION terminal acquires a logical 0 value and the TARIFF terminal comes to have a logical 1 value. If (s2) is in position of accumulated amount, said amount is shown on display in the same manner as it was previously described. The microprocessor will wait then to receive the initialization sequence. If it would receive the impuls (p1) and that of (p2) is delayed for more than three seconds, or if the expected (p1-p2) sequence is not received, the amount is not initialized as after the impuls of (p1), the microcontroller enters in a three-seconds delaying loop during which it will only accept the impuls of (p2). Any other operation returns the system to the initial status. The same process will be performed with the accumulates concerning the total calls number, the total pitches number or the total communication time, if (s2) is in the position corresponding to any of them and the push-button is adequate activated. The zeroing of these accumulates is jointly made. This situation will be maintained until the switch (s1) changed. Referring to the figures 2, 5a, 5b, 5c and 5c bis the NORMAL mode is analyzed as follows; wherein the system functions as tarifficator.

The switch (s1) shall remain in NORMAL mode. In this mode, the display will show in every moment the present accumulated amount, for which the microtelephone will remain on, except that the switch (i1) avoids its activation. While (i1) remains activated, it will be possible to receive calls without costs.

### BEGINNING OF THE COMMUNICATION

The monitorization process of the communication can be seen in the figures 5b and the followings. The mobile telephone set will remain activated and prepared for beginning the communication.

The system will detect the ciphers marked by the user, so that by performing free calls (in Spain 900 prefix), these are not charged by the equipment. This operation is performed by monitorizing the terminals CDT, CDR and CCD, by means of the interface with the mobile telephone set, in order to determine which ciphers have been dialed prior to the transmission of the number by transceiver. The ciphers dialed by the user are detected by the transceiver and are shown on the microtelephone screen. The microtelephone generates a different code for each cipher marked on the keyboard, whereby the tarifficator can read these codes and determine which number is being called. If the dialed number is a free one, the system will not charge the call (see figure 5b). In addition, the moment in which the number is sent is determined, which is produced when the transmission key code is detected by the tarifficator.

In parallel with the system monitorization, the microcontroller (MC) will be performing other activity in order to establish the moment wherein the communicaton with the called user it is materialized.

The connection detection circuit (DEC) which is based on the fact that the supply current intensity consumed by the transceiver, when transmitting, is larger than said intensity in standby state, permits to determine the moment wherein the user transmits the dialed number and the connection is initiated. The circuit consists of a comparator which generates a logical 1 value when said supply current overpasses a prefixed limit, maintaining a low level in the other case. This circuit output is read by the microcontroller (MC), which determines the connection status.

Once the connection status has been reached and detected, a monitorization status of the start of the communication is iniciated which is different depending on if the tariffication is performed by constant or by variable pitch.

In the case of tariffication by constant pitch the interface for the audio signals, quadrature amplifier circuit (AMC), with or without bandpass filter (F), and the analogical switch (IAA), is used to determine the instant wherein the communication is initiated.

The transmitted audio signals to the microtelephone after the dialing and transmission of the desired number, and prior to the connection between users, are formed by a periodical sequence of tones and pauses, in a similar manner as the signals generated in conventional telephony. The duration of periods can oscillate but that of the periods of pauses periods in never overpasses 5 seconds. The tone is generated by a combination of sinusoidal waves, whose main frequency component is about 500 Hz. Once the communication is begun said signals give way to others of totally aperiodical type.

With the purpose ot detecting the instant at the connection is produced, the microcontroller (MC) will continuously check if the received signals are periodical and with a main frequency component close to 500 Hz.

This will be carried out by means of a periodical interruption which will interrupt the main program execution with an approximate frequency of 7000 Hz. This interruption detects the audio signal status received by the microtelephone. The interface for the audio signals assures that the signal received by the microcontroller (MC) can be read and processed by the latter.

The analogical switch (IAA), for the audio signal transmitted by the microtelephone, is used to eliminate the effect that this signal produces over the received audio signal, while tone periods are being detected, interrupting this during said periods. In that end, the microcontroller (MC) activates the control signal of that circuit, in a manner that the signal does not appear at its outlet, which avoids that it interferes with the received audio signal. The quadrature amplifier circuit (AMC) generates a square wave of similar period as taht of the biggest main harmonic of the received audio signal. This audio signal is optionally processed by a bandpass filter (F) in order to obtain a sinusoidal signal with a frequency similar to that harmonic, which serves as entrance of the quadrature amplifier circuit (AMC).

The action performed by the microcontroller (MC) is to determine in every moment if the received audio signal corresponds to a tone period, or to a pause or to a communication tone. The microcontroller will begin a timing each time that a tone period finalizes, be it due to a pause period or to the definite establishment of communication. If the microcontroller detects a prolonged tone failure (approx. 1/14th minute), it will estimate that the communication has begun, acting in consequence. The error in estimating the instant of the start of communication will be less than 1/14th minute. The sampling frequency (7000 Hz) permits to detect with minimum error the components of frequencies higher than 600 Hz.

If the charging is performed according to the tariffication signal of the Telephone Company, the system should periodically activate (approximately each 1/14th minute) the number of pitches of the transmission accumulated by the transceiver from the beginning of the communication, or let that said information is automatically transmitted with that periodicity by the transceiver. This information is transmitted by the transceiver through the (CDR) terminal to the microtelephone, and is controlled by said transceiver by means of the (CCD) terminal.

The activation of the transmission is performed by sending through the (CDT) terminal a determined activation code which depends on the marks and models of the mobile telephone sets. To that end a keyboard activation and black circuit (CABT) is used. In normal conditiones this code should be transmitted through the keyboard, but the CABT permits the microcontroller to perform this function automatically. The reception of the code by the transceiver originates the transmission of the accumulated number of pitches to the microtelephone screen, said number being read and decodified by the microcontroller (MC) in order to determine the start of communication and to calculate the amount to be charged at every moment.

The keyboard activation and blocking circuit (CABT) can be exterior or interior with respect to the microcontroller. In the first case it consists of a voltage follower for digital signal and an associated control logic. Said logic permits the circuit, according to the binary value of its control inputs, to remain in three possible output status: logical 0, logical 1 or actuating as follower. The circuit is imbricated as interface for the transmitted signal by the microtelephone to the transceiver (CDT), for which the signal received by the transceiver can be, depending on the CABT control input status: 1) transmitted by the microtelephone; 2) the logical 0 or 3) the logical 1. In the second case, the CDT signal coming from the microtelephone is transmitted to one of the microcontroller inlets, functioning as the circuit output another port of the microcontroller. The outlet of that port will be the CDT signal which is transmitted to the transceiver. The outlet port will be able, therefore, to follow that of the inlet, to transmit code different codes to those received by this one, or to remain diactivated.

In any one of the two tariffication types there axists the problem that the detection of the start of communication is performed with a delay with respect to the instant whereat this takes place, for which it may give way to a case of performing free calls, except that the operating Company would transmit the start of communication signal, in which case it will be used to determine its beginning. To avoid this first situation, it is prevented by means of the keyboard activation and blocking circuit that the connection is prematurally cut off (CABT).

The method used to prevent free calls consists of maintaining unblocked the keyboard during the call tone periods, and blocked (or transmitting non-effective codes in each key impuls) until it is assured that the communication has not begun in the finalization instant of the last tone period. In this manner, the end of the connection can only be produced during controlled periods of time, or once the communication beginning has been detected and the corresponding amount charged. The blocking of the keyboard is obtained maintaining the CABT output at a logical 1 wherewith the signals generated by the keyboard keystrip are not transmitted to the transceiver, or, in the case of the internal CABT, generating non-effectiv codes to each key impuls.

The keyboard activation and blocking circuit (CABT) can equally be used in other cases wherein it is necessary to prevent the use of the keyboard by the user, or it is required to transmit information to the transceiver without performing the keyboard.

After detecting the start of the communication, in any one of the two tariffication forms, the microcontroller (MC) will increase the amount corresponding to the charging over the one already accumulated, and will begin a new 1/14th minute temporization period in which the charging is based on the constant pitch tariffication and the reception of information on the accumulated pitches in the variable pitch tariffication; or it will remain on waiting mode, in this second case, having received a new information over pitches of the Telephone Company, if this is periodically supplied by the tranceptor (see figures 5b, 5c and 5c bis).

The process performed after the finalization of the present timing period for the tariffication at constant pitch, or if the information over the pitches of the Telephone Company is not automatically received, is described as follows. In the case of the constant pitch tariffication the presently accumulated amount wil be increased by the value of one pitch, amount defined by the user in the TARIFF mode. In the case of the variable pitch tariffication, the transmitter will be activated in order to send the information of the number of the accumulated pitches, that information is read and the number of pitches occured during the last reading is determined, increasing the presently accumulated amount on display, with the corresponding value. If the reception of information on pitches is automatic, the tranceptor should not be activated, being read the information in the moment in which this is originated, continueing the process in the same manner as in the previous case.

Once the accumulated amount is actualized its new value is shown on the screen and a new timing period will begin or it will remain expecting the reception of new information relating to the pitches to be charged. This process will be repeated until the user actuates the hang up key in the microtelephone or the connection is terminated by external causes.

In the case of charging according to the tariffication signal of the Telephone Company, two different options are provided: that the charging follows exactly the evolution of said tariffication signal, or that said signal is only used in order to determine to which country the call is made, being performed posteriorly the constant pitch tariffication, with pitch value depending on the country whereto the call is made.

The pitches detected and charged by the sistem will be accumulated with the total of constant pitches or with the pitches of the Telephone Company, according to the charging method.

Every successful call process is registered by the operating Company, by transmitting the number of accumulated pitches up to that moment. In the case of free calls and the calls to the attendant services, this accumulation is void. This fact is taken advantage of by the system in order to determine when the calls to the attendant services or free calls are initiated, charging a fixed amount in the first case and not performing any collecting in the second one.

In the case that a reading/recording unit of intelligent chip cards is performed, the equipment will not permit the ciphers marking (using the CABT=AKHC) till it is detected, through the corresponding logical inlet, that an intelligent chip card has been introduced in the reading unit, and that this comprises sufficient amount storing to initiate a call. Once detected the presence it will read, through the communication serie path, the present amount on chip card, being able then to initiate a communication. The present amount on display will be decreased each time a pitch is detected or a collecting period finalized. Besides, the system will transmit to the reading/recording unit the order to store the resting amount on the chip card, through the path serie.

### FINALIZATION OF THE COMMUNICATION

Once the user has actvated the hooking switch, situated in the microtelephone, the connection finalized and the connection detection circuit (DEC) situates its outlet to logical 0, fact which is detected by the microcontroller and that produces the collecting process stop.

The system will perform a last activation in order that the transceiver transmit the pitches information, if this amount would have been variated after the connection finalization and will added it, if proceeds, to the accumulated amount. On display it will be visualized the accumulated amount.

Come to this point, the user will be able to initiate another call which amount will be added to the prior value or to return the microtelephone to its support. The figures 5c and 5c bis show the flow diagram of the communication finalizing process. On this point, the service beneficiary will be able to initialize the marked amount on display, actuating sequently the push-buttons p1 and p2, by this stepping order, on a lag time minor than 3 seconds between both impulses, as the same manner exposed for the accumulates initialization.

The initialization of the prior amount originates the addition to this to the accumulated amount, which can be visualized in the INTEGRATION mode.

On finalizing the connection the equipment will return to visualize the rotary salutation and operating instructions message, remaining diponible to be newly performed.

If a reading/recording unit is used for intelligent chip cards, the communication finalization can also be originated when the stored amount of the chip card is payed off, fact that it will be advised to the user by means of a high frequency tone of 1 second duration.

If the communication concludes by any other circumstances than the amount ending on the chip card, the equipment performs the last activation in order to received the consumed pitches information and, in its case, collects the failed ones and transmits the order to store the rest amount on the chip card.

On connection finalization, it will be shown the rotatory message as in the previous case.

### FAILURE OF THE POWER SUPPLY

If the tarifficator power supply fails, a system based on an internal battery enters in action in order to prevent that stored accumulated data do not get lost. This system can preserve the data during various weeks. See figure 2.

### COMMUNICATION SERIE OF THE ACTUAL AMOUNT

On finalizing the service attendance, the supervisor of this will be able to collect from the user according to the visualized amount on tarifficator display, or to transmit said information to a general tarifficator which could be a taximeter, by means of an adequate port serie designed for this purpose, in order that the taximeter perform the accumulation of all the amounts for this and other services or supplements to be collected.

The communication is materialized through two cores, being performed in a asynchronous manner, byte to byte. One of the cores carries the transmitted information, following a standard protocol. The other core performs control functions. It is the external system which initiates the transmission in the moment when is required by the supervisor, by means of changing the status in the control terminal, which will indicate to the tarifficator that a byte should de transmitted. The same procedure it will be followed for the transmission of the rest of the bytes, once the external system be prepared to receive them.

The invertion of the status of the correponding core originates an interruption in the microcontroller, which initiates the transmission of the following byte. The transmission of each byte is performed bit to bit through the carrier core till that the last bit have been transmitted. In that moment the tarifficator will return to the initial status, till the external system generate another interruption of byte transmission initiation.

Once performed the transmission or the amount initiated this comes to increase the total accumulated amount, visualized in INTEGRATION mode, being initialized the accumulated value on display to void. See figures 1 and 2.

### RECEPTION OF CALLS

The tarifficator equipment permits the reception of calls without costs, whichever be the actual performing mode. When a call is received, it is detected through the connection detection circuit (DEC). As the cipher key has not been activated, one comes to the conclusion that the consumption increase is due to a incoming call, therefore it is entered in the non-collecting mode, being shown on display a relative message to this fact. The system remains in this status till that communication finalize, moment whereon it will return to permit the the outcoming calls performing. The calls reception can be performed by means of the microtelephone, or using the hands-free equipment of the mobile telephone set.

Once sufficiently described the present invention nature, as well as a form of carrying it to the practice, it rests only to add that in its whole and its component parts it is possible to introduce chnges of form, materials and of disposition provided that said modifications do not vary substancially the characteristics of the invention which are claimed in the following.

### Fig. 1

(25) POWER SUPPLY
(26) MAN/USR
(27) SGL/USR
(28) READING/RECORDING OF INTELLIGENT CHIP CARDS
(29) =
(30) =
(31) EXTERNAL ACCUMULATOR SYSTEM
(32) MT

### Fig. 2

(1) AKHC
(2) =
(3) AAS
(4) MT
(5) =
(6) =
(7) =
(8) MAN/USR
(9) TARIFF
   NORMAL INTEGRATION
(10) SGL/USR
(11) =
(12) =
(13) PORT SERIE
(14) INTERRUPTION
(15) =
(16) READING/RECORDING OF CHIP CARDS
(17) =
(18) EXTERNAL SYSTEM
(19) DT
(20) DISPLAY
(21) =
(22) POWER SUPPLY
(23) BATTERY
(24) POWER SUPPLY CONTROL

### Fig. 3

(1) TARIFF
(2) INITIAL AMOUNT SHOW
(3) yes
(4) PITCH AMOUNT SHOW
(5) INITIAL AMOUNT INCREASE
(6) yes
(7) PITCH AMOUNT INCREASE
(8) yes
(9) INITIAL AMOUNT DECREASE
(10) LOOP
(11) PITCH AMOUNT DECREASE
(12) DELAY 0.12 S
(13) LOOP

### Fig. 4

(1) INTEGRATION
(2) ACCUMULATED AMOUNT SHOW
(3) yes
(4) TOTAL COMMUNICATION TIME SHOW
(5) TOTAL CALLS NUMBER SHOW
(6) TOTAL PITCHES NUMBER SHOW OF TELEFÒNICA
(7) LOOP
(8) yes
(9) INITIALIZE TARIFFICATOR
(10) P2 AND NO TEMPORIZATION
(11) INITIALIZE ACCUMULATED AMOUNT
(12) yes
(13) INITIALIZE TOTAL COMMUNICATION TIME, TOTAL PITCHES NUMBER OF TELEFÒNICA AND TOTAL CALLS NUMBER
(14) LOOP

### Fig. 5a

(1) LOOP
(2) CONNECTION, COMMUNICATION AND KEY IMPULS INITIALIZATION CONTROL
(3) TARIFF
(4) MODE SELECTION?
(5) INTEGRATION
(6) =
(7) MESSAGE
(8) COLLECTING MODE?
(9) LOOP
(10) yes
(11) COLLECTING AMOUNT SHOW
(12) CANCELLATION SEQUENCE COLLECTING AMOUNT?
(13) CANCEL COLLECTING AMOUNT ADDITION TO ACCUMULATED AMOUNT
(14) =

### Fig. 5b

(1) =
(2) CONNECTION?
(3) CONNECTION INITIALIZATION
(4) yes
(5) SERVICE CIPHER
(6) INITIATE PITCHES AKQUISITION OF TELEFÒNICA
(7) COLLECT FIXED AMOUNT
(8) PASS TO NO COSTS MODE
(9) LOOP
(10) CONNECTION FINALIZING
(11) INTERRUPT/SHOW MESSAGE
(12) COMMUNICATION?
(13) LOOP
(14) INCREASE TOTAL COMMUNICATION TIME, TOTAL CALLS NUMBER, TOTAL PITCHES NUMBER OF TELEFÒNICA
(15) INCREASE COLLECTING AMOUNT TO INITIAL AMOUNT + AMOUNT ACCORDING TO FIXED OR CALCULATED PITCHES NUMBER
(16) =
(17) INITIATE INTERVAL TEMPORIZATION
(18) =
(19) TARIFFICATION CONTROL
(20) =

### Fig. 5c

(1) =
(2) PERFORMED PITCHES READING OF TELEFÒNICA
(3) yes
(4) INCREASE TOTAL PITCHES OF TELEFÒNICA
(5) INCREASE COLLECTING AMOUNT ACCORDING TO PITCHES READED SHOW COLLECTING AMOUNT ON DISPLAY
(6) DISACTIVATED INTERVAL TEMPORIZATION?
(7) yes
(8) INCREASE TOTAL COMMUNICATION TIME
(9) INITIATE PITCHES AKQUISITION OF TELEFÒNICA
(10) CONNECTION?
(11) =
(12) =
(13) INTERRUPT/INITIATE PITCHES AKQUISITION OF TELEFÒNICA
(14) TARIFFICATION CONTROL
(15) PERFORMED PITCHES READING OF TELEFÒNICA?
(16) POSSIBLE PITCHES READING OF TELEFÒNICA?
(17) yes
(18) LOOP
(19) INCREASE COLLECTING AMOUNT ACCORDING TO PITCHES READED SHOW COLLECTING AMOUNT

### Fig. 5c bis

(1) =
(2) DISACTIVATED INTERVAL TEMPORIZATION?
(3) CONNECTION
(4) yes
(5) =
(6) INCREASE TOTAL COMMUNICATION TIME
(7) INTERRUPT
(8) INCREASE COLLECTING AMOUNT ADDING EQUIVALENT TO 1 PITCH
(9) LOOP
(10) SHOW COLLECTING AMOUNT
(11) =

## Claims

1. Tariffing and collecting device for mobile tlephony with the electronic communication of the amouunt to facilitate the calls performing with mobile telephony, being adaptable to any mobile telephony of any mark or country by means of light modifications, being also adaptable to other uses of the wireless mobile telephony, as the mobile telephony by satellite and other types of mobile telephony which could be developed in the future; which use is mainly destined to taxis cabs and to zones which required a collecting centralization or a collecting totalization; of the type of tarifficators which include in their performing a normal mode as tarifficator properly said, a tariff mode to change the tariff to be collected, and an integration mode to visualize the amount and/or the total time or to cancel to void, consisting said system of a control subsystem (1), a display subsystem (2) and other for power supply (3), characterised in that the said system presents the capacity of the communication serie of the accumulated account in the visualisator through a port serie, with the purpose that the said amount could be read and jointly processed with the amounts of other services in one external element of collecting centralization as p.e. a taximeter. Also the tarifficator disposes of an internal battery system in order to preserve the stored accumulated data in case of a failure of the power supply.

2. Tariffing device, according to the former claim, characterised in that in the detection of the pitches transmitted by the operating Company there are two options: 1) periodical activation of the transmission and 2) activation at the connection initialization, being performed this latter in the cases in that the transceiver could be programmed for performing the transmission of that information automatically at regular time intervals.

3. Tariffing device, according to the previous claims, characterised in that it detects the dialed numbers using signals interchanged by the transceiver and the microtelephone, with the purpose that calls to non-chargeable numbers are not chrged by the system.

4. Tariffing device, according to the previous claims, characterised in that it detects the reception of incoming calls, permitting the answering to said calls in any functioning mode, with the microtelephone, or in hands-free mode, and blocking the equipment so that the reception is not involuntarily interrupted, using the circuit DEC and that of detection of activated keys in order to determine the reception status.

5. Charging device, according to the previous claims, characterised in that it could be connected to a reading/writing equipment of intelligent chip cards, permitting the initialization of calls when a valid card and with sufficient amount of money available in its memory, is introduced in the reading element.

6. Charging device, according to the previous claims, characterised in that the serial port is used to read the amount of the card, which will be visualized through the display.

7. Charging device, according to the previous claims, characterised in that the call charging of the call will be performed decreasing the corresponding value from the amount represented on display each time that a pitch is received, or a cahrging period is ended, the tarifficator storing the remanent amount on the card, each time that this occurs, through the communicaion line.

8. Charging device, according to the previous claims, characterised in that the finalization of the stored amount in the card causes the termination of the communication, and the return of the system to its original status.
